# EUROPEAN PATENT APPLICATION

(11) **EP 3 528 152 A1**
(43) Date of publication of application: **21.08.2019**
(21) Application number: 19154986.4
(22) Date of filing: 01.02.2019
(51) Int. Cl.: G06F 21/31, G06F 21/36

(54) **METHOD AND APPARATUS FOR USER AUTHENTICATION**

(30) Priority: 15.02.2018 EP 18305158
(71) Applicant: InterDigital CE Patent Holdings, 75017 Paris (FR)
(72) Inventor: ALLEAUME, Vincent, 35576 CESSON-SEVIGNE (FR); JOUET, Pierrick, 35576 CESSON-SEVIGNE (FR); LUO, Tao, 35576 CESSON-SEVIGNE (FR)
(74) Representative: Ståhl, Björn Niclas

(57) **Abstract**

A method for authenticating a user in which a processor (810) receives (31) user input representing selected authentication elements among authentication elements presented to a user and triggers (33) failure of user authentication or validates (36) user authentication responsive to received authentication elements using at least one user interface authentication set comprising at least one mandatory authentication element required to be selected by a user for successful user authentication and at least one failure authentication element triggering failure of user authentication when selected by a user, wherein at least one authentication element corresponds to a time location in a media content.

## Description

### Technical field

A method and an apparatus for user authentication are disclosed.

### Background

User interaction sessions executed on multimedia devices such as computers, smartphones and tablets typically begin with an authentication procedure, to check the user's rights to initiate the intended action. For instance, in such a user interaction session, the user may want to access content in its digital account(s), such as files, or to proceed to a payment to consume a temporary (such as video-on-demand) or permanent service (such as purchasing digital song(s)...), or to subscribe to a new service, or to post comments or to consult social media, etc...

Most conventional authentication procedures rely on password based approach. On devices equipped with a real keyboard or even a mouse device, that authentication procedure is typically straightforward, but with an inherent poor privacy context (when done in a crowded or public place for instance).

US 2013/117813 disclose a system in which a set of pictures, each associated with a letter, is provided to a user. The user is authenticated in response to letters input, provided that the letters do not correspond to too many pictures in categories that would never be chosen by the user.

However, on recent devices including devices with limited user input means, such as smartwatches or augmented reality headsets and virtual reality headsets, the user interaction when it's comes to password based authentication is much more challenging, starting with the procedure to enter each character (and/or number) in case of textual password, which usually involves a virtual keyboard display plus gesture or voice based selection.

US 2017/300686 discloses a system in which a user can be authenticated by correctly selecting a set of pictures from a provided set of pictures in response to a specific request; for example, "Find the friends you went to University of Missouri with". A drawback of this solution is that it is relatively insecure.

US 2017/0019407 discloses a CAPTCHA-like system in which a user can be authenticated by correctly selecting photos of Bill Gates among a greater number of photos. A drawback of this solution is that it is general, i.e. applies to any use, rather than specific to a user.

Therefore, there is a need for a new method for user authentication.

### Summary

According to an aspect of the present principles, a method for authenticating a user by a processor that receives user input representing selected authentication elements among authentication elements presented to a user, triggers failure of user authentication or validates user authentication responsive to received authentication elements using at least one user interface authentication set including at least one mandatory authentication element required to be selected by a user for successful user authentication and at least one failure authentication element triggering failure of user authentication when selected by a user, wherein at least one authentication element corresponds to a time location in a media content.

### Brief description of the drawings

Figure 1 illustrates an example of a CAPTCHA text,
Figure 2 illustrates an exemplary method for determining a user interface authentication set according to an embodiment of the present principle,
Figure 3 illustrates an exemplary method for authenticating a user according to an embodiment of the present principle,
Figure 4 illustrates an exemplary audio element shown as audio graph according to an embodiment of the present principle,
Figure 5A illustrates an exemplary user interface authentication set according to an embodiment of the present principle,
Figure 5B illustrates an exemplary user interface authentication set according to another embodiment of the present principle,
Figure 6 illustrates an exemplary time line presentation of media elements for user authentication acccording to an embodiment of the present principle,
Figure 7A-B illustrate exemplary user interface authentication elements selected by a user for authenticating to a device, according to embodiments of the present principle,
Figure 8 illustrates an exemplary apparatus for determining a user interface authentication set and/or authenticating a user, according to an embodiment of the present principle.

### Description of embodiments

Regarding emerging products with limited user character input capabilities, it appears that the classic authentication based on character's password entering is not convenient in a day-to-day life, specifically for devices with lack of convenient keyboard, such as augmented reality (AR) or Virtual Reality (VR) headsets, but also for autonomous smartwatches, not attached to a smartphone.

User authentication on such devices is typically takes longer, usually owing to the virtual keyboard layout that tends to require switching from mode to mode, such as switching from letters to numeric or special characters, and also owing to the need for the user to select accurately each of the password character individually. However, the privacy seems much preserved in this context.

Other authentication systems may be used, such as fingerprint recognition based system or iris recognition approach. But, such authentication systems require some specific hardware embedded in the device through which the user authenticates.

In addition, as password security requirement increases, the authentication procedure becomes more tedious since more complex and/or longer passwords are required.

Beside these password-based authentication procedures, there are also verification procedures typically seen on the web, for instance when it comes to validation of user comments to check that a user is not a robot (also known as a bot) trying to submit data entries automatically.

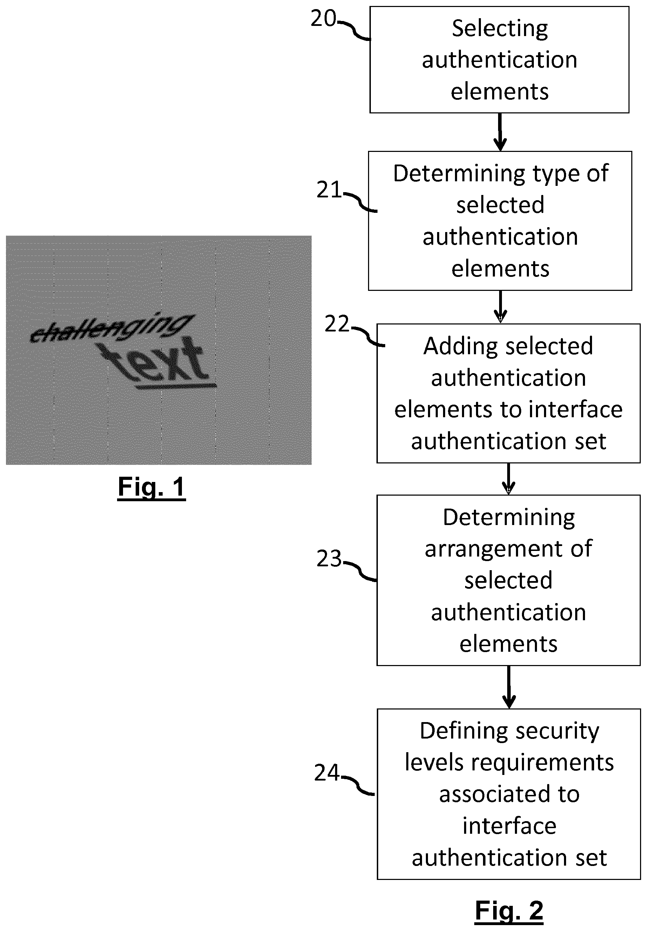

Such a verification method is usually text-based and consists in displaying distorted text that only a human is expected to reproduce correctly as its validation step. FIG. 1 illustrates an example of such a distorted text, also called CAPTCHA ("Completely Automated Public Turing test to tell Computers and Humans Apart"). An audio-based version also exists, replacing the distorted text challenging input by sound.

But in both cases, the user needs to enter, again using a real or virtual keyboard, a sequence of characters, which can still be a tedious task for instance for users equipped with headset devices.

A recent alternative to text-only-based check procedures (for both verification and authentication procedure) are methods using an image-based approach.

For verification procedures for instance, the verification step could be an image filtering procedure, where a sequence of image(s) is displayed to the user, with the task to select (or unselect) image(s) containing a specific object or context that is indicated during that step. For instance, a set of images may be displayed, some containing road signs that the user needs to (de)select to validate the verification step. This assumes that a (software) robot is not able to do that same task, which is not so guaranteed given the latest progress in deep learning algorithms from which a bot could benefit.

With higher security requirements on password (long sequence of characters, use of various and special characters), the task of inputting a password becomes a long, tedious and challenging task for the users.

Instead of complex character sequences in authentication procedures, the present discosure proposes an authentication method that replaces the use of classical textual passwords with media passwords composed of media elements, such as image(s) elements, video(s) elements, audio(s) elements, or combination of these as validating elements during the authentication procedure.

In the case of users using a small (smartwatches) or third-party-hidden display (AR or VR headset), high privacy is thus ensured to the user in the authentication procedure, even if the user is being closely watched by a malicious observer.

According to an embodiment of the principles, different security levels can be set by the user or system administrator with respect to the device used for performing the authentication procedure, or to the user's or device's location (but not limited to these examples), for providing tuning of balance between security and practicability of the authentication procedure.

Figure 2 illustrates an exemplary method for determining a user interface authentication set according to an embodiment of the present principle. The user interface authentication set comprises authentication elements that a user selects for validating an authentication procedure. In the following, an authentication element may correspond to a media element, such as image(s), video(s), audio elements, or any other media file that could be used, but also to a location in time, to a location in space or to a combination of the two.

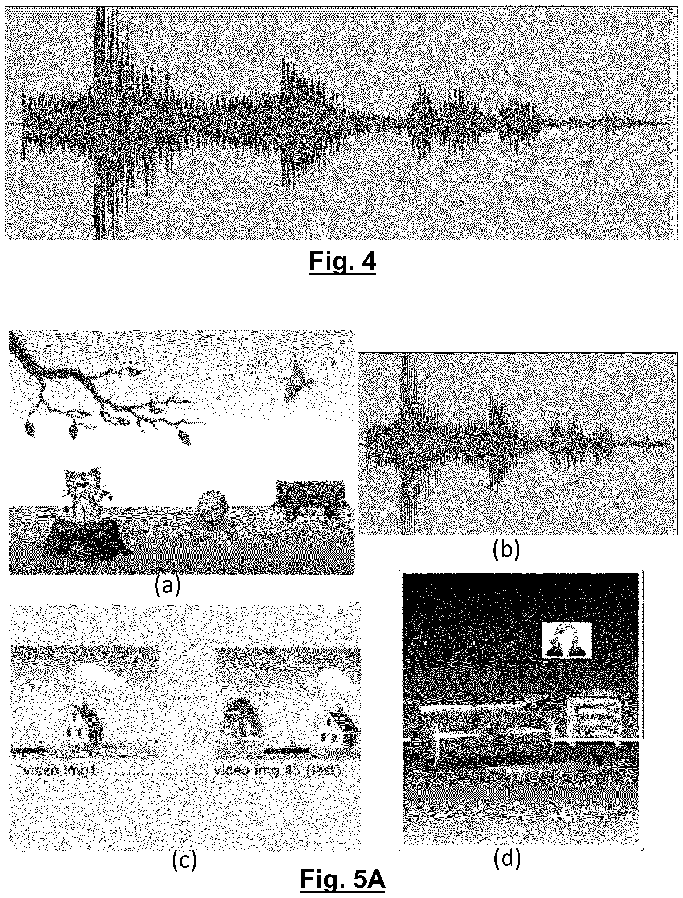

In the case of an audio element, the audio element can be presented to the user either as an audio signal played by the device or as a visual audio graph representation such as the one illustrated in fig. 4. In that case, selecting a location in time in the audio file corresponds to select a spatial location of the visual audio graph.

The user interface authentication set comprises mandatory authentication elements selected by the user that form the media password used for authenticating the user on a device and also additional information allowing to improve password security.

Such additional information may comprise information indicating a time or a spatial arrangement of the authentication elements forming the password.

The additional information may also comprise failure authentication elements that, when selected by the user during the authentication procedure, trigger failure of the authentication procedure. Such a failure authentication element may correspond to a media element and/or location(s) in time and space inside selected media elements.

The additional information may also comprise neutral authentication elements that, when selected by the user during the authentication procedure, have no impact on the authentication procedure. Such a neutral authentication element may correspond to media element and/or location(s) in time and space inside selected media elements. Such neutral authentication elements can make reproduction of the password more difficult for a hacker.

The method for determining a user interface authentication set may be performed by any user device equipped with a processor, memory and user interaction means, such as a Personal Computer, a tablet, a smartwatch, and VR or AR headsets.

Referring to Fig. 2, in step 20, user inputs for selecting at least one authentication element to add to the user interface authentication set, are received by the device performing the method. Such user inputs could be received using any user interaction means provided by the device. For examples, user inputs can be: clicking on displayed media elements, gesture tap on a headset with gesture recognition, tapping on a touch-sensitive smartwatch screen, and eye-gaze interaction.

For instance, in step 20, media elements are displayed to the user and the user selects some of the displayed media elements.

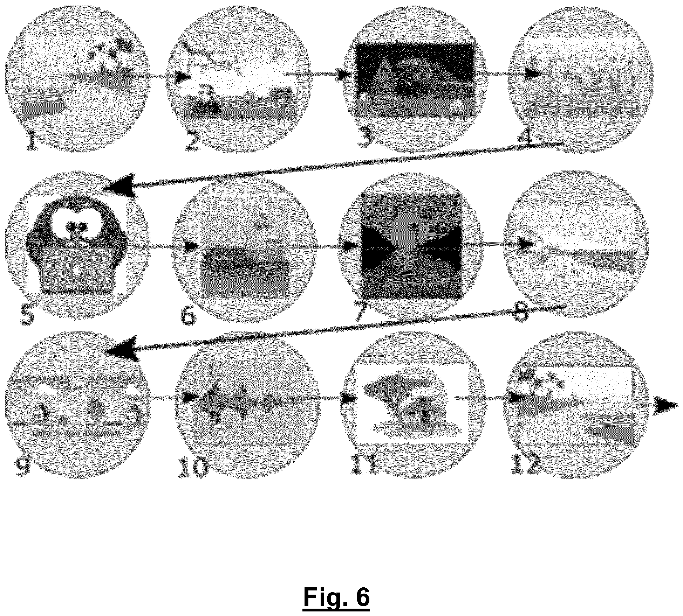

An exemplary presentation mode to the user for selecting media elements to compose or submit a media password could be a list of media elements, such as the one illustrated in Fig. 6. The presentation of Fig. 6 is suitable for presenting media elements one by one on a small screen device, such as a smartwatch.

In the case of presentation in the form of a list, the user could select the media elements one by one, before validating the end of the selection step. The presentation could be done using one global list or any graphical layout, but also using multiple succeeding pages of elements through which the user could navigate.

In a more convenient way for small screen devices for instance, the presentation could instead be driven by time, and the user would pick each media element once displayed (amongst all candidates), and then providing any additional authentication criteria if required, as explained below. The extra criteria prompt could (without limitation to these) be done immediately after a new item is picked or selected by the user, or once all the media elements have been selected by the user.

According to a variant, the mode presentation of the media elements for selection by the user is adapted to the device performing the method.

For example, Fig. 5A illustrates 4 media elements (a-d) selected by a user as authentication elements. Media elements (a) and (d) are images, media element (b) is a visual audio graph representative of an audio signal, for instance a song file belonging to the user, and media element (c) is a video file.

In step 21, the type of the authentication elements selected by the user is determined. In this step, for each selected authentication element, the user indicates whether the authentication element is a mandatory authentication element for validating a user authentication, whether the authentication element is a failure authentication element triggering failure of user authentication, or whether the authentication element is a neutral authentication element.

For example, in the example of Fig. 5A, the user has selected the 3 following media files for composing its media password:
- A personal image from its gallery, showing his cat on a cut tree in its garden (Fig. 5A (a)),
- A short audio file of a recorded sentence (Fig. 5A(b)), for instance a 3 second audio capture,
- A short video sequence of its favorite film (fig. 5A (c)), for instance a 5 second video of a moving view traveling from right to left, finally showing a tree not visible at the start of the view traveling.

In the example, the three media elements of Fig. 5A (a, b, c) are determined by the user as mandatory authentication elements, while the user sets media element (d) of Fig. 5A as a failure authentication element.

According to a variant, as mentioned above, the user can also provide during password creation some additional media element success/failure selection criteria, these criteria being possibly specific to each media element, or for a combination of elements (if of the same type, for instance, or the same duration, or not).

According to this variant, in step 21, the user also indicates for each mandatory media element, at least one specific area inside the media element and indicates whether the selected specific area is a mandatory, failure or neutral authentication element.

For selecting a specific area, the user could touch or click on the displayed media representation to mark location, but a more elaborate approach could use a specific gesture or any other type of selection (double-click, double-tap, drawing a cross sign centered on that location, etc.).

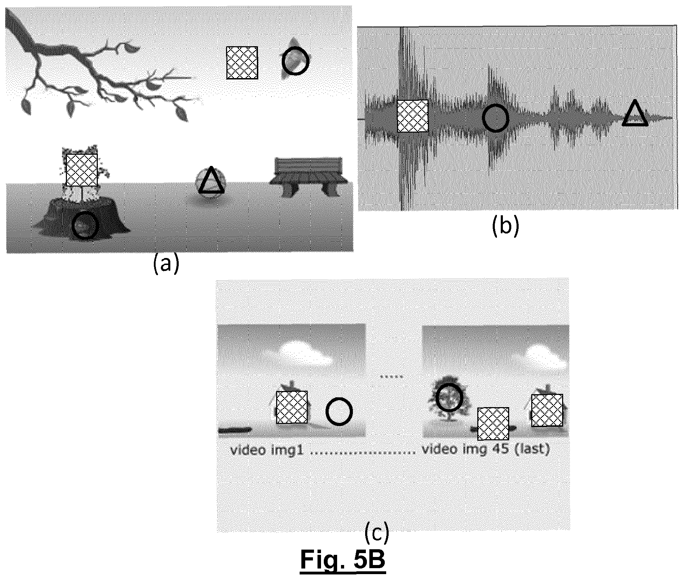

An example of another user interface authentication set is illustrated in Fig. 5B wherein success and failure criteria have been associated with mandatory media elements. For example, as illustrated in Fig. 5B (a), the user has indicated the areas inside the images that are mandatory and shall be selected (represented by circles) and the areas inside the images which are failure authentication element and shall not be selected during user authentication procedure (represented by cross-filled squares). In the example, in Fig. 5B (a), the base of the tree and the bird are mandatory authentication elements, the cat and the sky are failure authentication elements. Optionally, neutral areas inside the media element can be indicated (represented by triangles).

In the example of the audio media element of fig. 5B (b), the user could have specified a success criterion for the recorded audio element, being that an authenticating user shall perform a selecting action during the second pulse of the audio (circle in fig. 5B (b)), and inversely a selection during the first pulse is an authentication failure criterion (cross-filled square in Fig. 5B (b)). It will be noted that the audio could also be provided, not as a real audio file needing playback (which then could be bad for privacy reasons) but as a frequency-shaped temporal view (i.e. an audio graph), like the example of fig. 5B (b)). In this example, the user has also set a neutral area at the end of the audio file (triangle in fig. 5B (b)).

In the example of the video media element of fig. 5B (c), the user has specified that a selecting action on the point to the right of the house, as the video begins, is be a mandatory authentication criterion (circle in img 1 of fig. 5B (c)). Also, selection of the tree at the end of the video is another mandatory authentication criterion (circle in img45 of fig. 5B (c)), while selection of the house at any moment in the video is a failure criterion (cross-filled square in img1 and img45 of fig. 5B (c)).

In step 22, the selected authentication elements, corresponding types (mandatory, failure, neutral), and associated success and failure criteria (mandatory, failure and neutral areas in the media elements) are added to the user interface authentication set and stored in memory.

According to a variant, in step 23, an arrangement of the selected mandatory authentication elements in a mandatory order is determined. That is, according to this step, during the authentication procedure, the mandatory authentication elements shall be selected in the predetermined order to qualify the entry order as a full success for that mandatory order criteria. In the example of Fig. 5A, media elements have to be selected in the order: a-b-c during a user authentication procedure.

According to this variant, any other order of media element selection during the authentication procedure would trigger failure of the authentication procedure. It is noted that this step is optional and may depend on the security level associated with the user interface authentication set if any, as discussed hereinafter.

According to a variant, in step 24, security level requirements are defined and associated with the user interface authentication set. This step is optional and the user interface authentication set may be used without any security level requirements set defined. In that case, by default, it is assumed that the user interface authentication set is associated to the highest level of security level (meaning that authentication success requires selection of all mandatory authentication elements in the mandatory order, and no failure authentication elements being selected).

According to a variant, several security level sets of requirements can be defined and associated with the user interface authentication set. According to an embodiment of the present principle, security level sets can be determined as a function of the devices used for user authentication.

For examples, for personal/private devices, such as smartwatches or mobile phones, low level security requirements can be set, while high level security requirements can be set for shared devices or easy-to-spy devices.

For example, a high-security level set of requirements may comprise the following conditions to be satisfied when the user performs the authentication procedure:
- all mandatory authentication elements shall be selected in a predetermined order,
- no failure authentication element shall be selected,
- neutral authentication elements may be selected,
- mandatory locations in space and time inside mandatory media element shall be selected, and
- no failure locations in space or time inside media element shall be selected.

Other levels of security may be defined dynamically when the authentication procedure is performed. The hardware information of the device used for authentication procedure could be first collected, e.g. the screen size and the sensors to be used for user interaction, followed by a determination of a suitable level of security to verify the user's authentication input in function of the device used.

According to another variant, the user or a security administrator can define and control the level of security by deciding for example the level of detail required to validate or reject a media password, depending on the device from which it is entered, but not limited to these two examples.

This option in level of security set assumes that when the media password is created, the highest level of details, that is the parameters of the user interface authentication set, is provided, being for instance some or composition of:
- The order in which the media element(s) are being added to the media password being built,
- Specific parameter(s) of the media element being added, for instance:
   ∘ Specific area(s) or location(s) inside the selected image,
   ∘ Specific time location(s) in an audio file or space location(s) into an audio file presentation,
   ∘ Specific location(s) (in space and time) in a video

During the media password creation, different security levels can be defined for that same media password.

The type of security levels and related authentication procedure checks could then be (without limitation to the below arguments):
- Low level security example of authentication success:
   ∘ The authentication system presents to the authenticating user a set of media(s) element(s) that globally contains a parametric number of various media(s) (of various type(s)), including all the media element(s) that compose the user's media password,
   ∘ The user selects elements in the list (possibly a more elements than necessary considered as having no effect on the result of the user authentication procedure, but at least including the mandatory authentication media elements composing its media password, that selection being possibly not done in the same original selection order used when defining the media password)
   ∘ The authentication system simply checks the user has selected at least all the mandatory authentication media elements that belongs to its media password, and set the authentication procedure as being successful.
- Medium level security for authentication success:
   ∘ The authentication system presents to the authenticating user a set of media(s) element(s) that globally contains a parametric number of various media(s) (of various type(s)), including all the media element(s) that compose the user's media password,
   ∘ The user selects all the mandatory authentication media elements belonging to its media password, and only these, in the same selection order that the order they were added to the media password,
   ∘ The authentication system checks the user has selected all (and only) the media elements that belongs to its media password, checks the order of selection is matching the order of insertion used during media password creation, and only then set the authentication procedure has a success.
- High level security for authentication success:
   ∘ The authentication system presents to the authenticating user a set of media(s) element(s) that globally contains a parametric number of various media(s) (of various type(s)), including all the media element(s) that compose the user's media password,
   ∘ The user selects all the mandatory authentication media elements belonging to its media password, and only these, in the same selection order that the order they were added to the media password,
   ∘ For each media element(s) the user has selected, he/she also specifies space or time location(s) in some of the mandatory authentication elements, to meet any success criteria defined (in our example of fig. 5B(a) the user selecting the image with tree and cat would then also select the bird and the tree base in the image, but NOT the cat, defined as a failure event when selected, for instance)
   ∘ The authentication system checks the user has selected all (and only) the mandatory media elements that belongs to its media password, checks the order of selection is matching the order of insertion used during media password creation, and all the success criteria, none of the failure criteria, and only then set the authentication procedure has a success.

According to a variant, in any one of the above defined security levels requirements, when authenticating, the user can also select any neutral authentication elements at any time in the authentication procedure, in addition to the mandatory authentication elements without impacting the ongoing authentication procedure.

Depending on the user, the determined user interface authentication set could be valid for a single device only, or to a wide range of devices which are network connected or not. The only practical requirement that controls this parameter is the accessibility (through network or otherwise on local storage of the device) of each media element composing the media password.

For each device not connected to a network and on which the user wants to use the same media password in an authentication procedure, however, the creation or change of the media password will need to be repeated. Before creating or changing the password on these devices, the user must ensure these devices have access to the media elements of the new password.

The determined user interface authentication set could also be used as a shared password on connected devices having access to, but not limited to, the same user's medias (typically the user's own image(s), video(s), audio(s)) and/or public media element(s) that could be used during the media password generation.

To avoid the user to have to redo the whole creation process on every not connected devices, some export processes could be proposed, similarly as it is possible to generate reusable configuration file(s) using any descriptive format (such as XML, JSON) to help regenerating exactly the same media password on isolated devices having some external storage access (USB key storage for instance). This configuration file could include both media file(s) element(s) (or references thereto) and related details, to automatically create it on the device where the configuration file is provided.

Apart from the option of copying the configuration file across unconnected devices, the file could be updated automatically through a server for network connected devices.

Adding extra criteria as success or failure condition increases the level of security of the global media password, and the balance between the number of media elements composing the media password and the number of extra criteria added to each media element helps the user to assign a level of security for the later authentication procedure(s) based on this media password.

A purpose of failure authentication elements, or forbidden marks, is to help an authorized user prevent unauthorized media password reproduction from a malicious user. In case a malicious user tries to enter approximately a media password after having spied on the legal user entering its password, wrongly pressing an area defined as forbidden (failure area) during media password setup, may then (depending on the security settings) set the whole authentication attempt as failed.

So, to make even harder the copy by spying of its password, the authorized user may simply, while entering its media password, press purposely some non-marked area located very close to defined forbidden marks, and even though this will not cause his own authentication attempt to fail, as these areas are marked as neutral, they are not marked as mandatory for success, and also not marked as failure case for authentication (even if close from such areas), then a spying person would surely be unable to detect precisely the useful select locations from the one being required, the one being forbidden (amongst some being obfuscating).

When media element is presented following a time line, the lifetime of each defined failure/mandatory criteria could also be a parameter, with respect to the duration of presentation of the related element media. For instance, a success requirement could be to select a specific item, but only after a moment it was presented to the user. For instance, in the example of the video of Fig. 5A (c), the user could have to select the house, but only in the second half of the video media element, to get the success criteria being validated, for instance the house shall be selected only when the tree becomes visible. Thus, according to this variant, in the user interface authentication set, a time parameter is associated with the location of the mandatory media element that shall be selected.

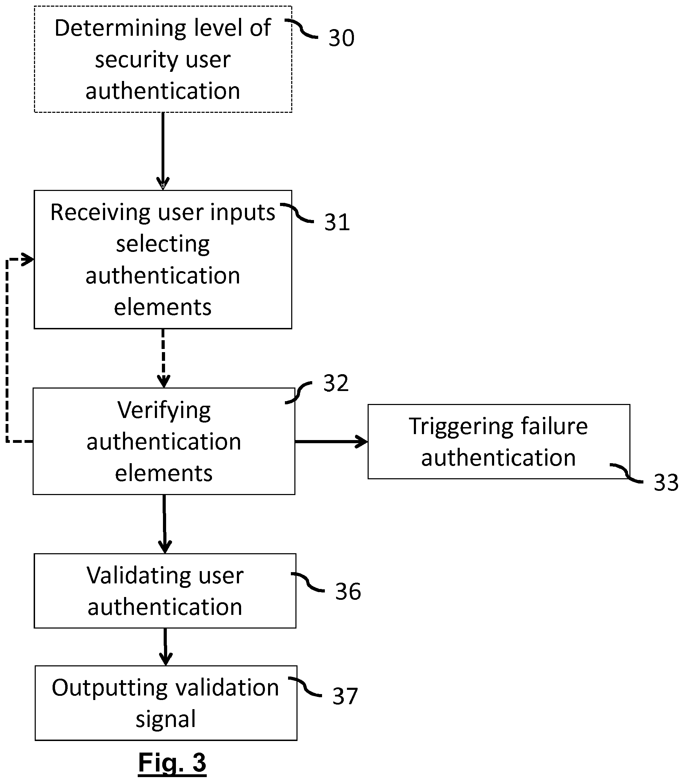

Figure 3 illustrates an exemplary method for authenticating a user according to an embodiment of the present principles. The authentication procedure is thus performed by the device to which the user wants to have access.

The result of the authentication procedure based on a user interface authentication set depends on the level of security used for the authentication procedure. According to an embodiment of the present principles, the level of security applied to the authentication procedure can be determined adaptively by detecting the type of device that engages the authentication procedure.

In step 30, a level of security for the ongoing user authentication is determined. Such a step may be optional, as only one level of security may be defined for the user interface authentication set.

When different sets of security level requirements have been defined for a same user interface authentication set, the level of security is determined as a preliminary step of the user authentication procedure. The level of security may be determined dynamically by the device receiving from a server the security level requirements to satisfy, or the security level requirements may be stored in a memory of the device with the user interface authentication set.

In the example described below, the user interface authentication set used for authentication is the one illustrated in Fig. 5B.

In step 31, user input selecting authentication elements among authentication elements presented to a user are received by the device on which the user wishes to authenticate. The presentation of the media elements to the user can be done in a similar manner as discussed above in the method for creating the media password with reference to Fig. 2. According to a variant, the mode presentation of the media elements for selection by the user is adapted to the device performing the method.

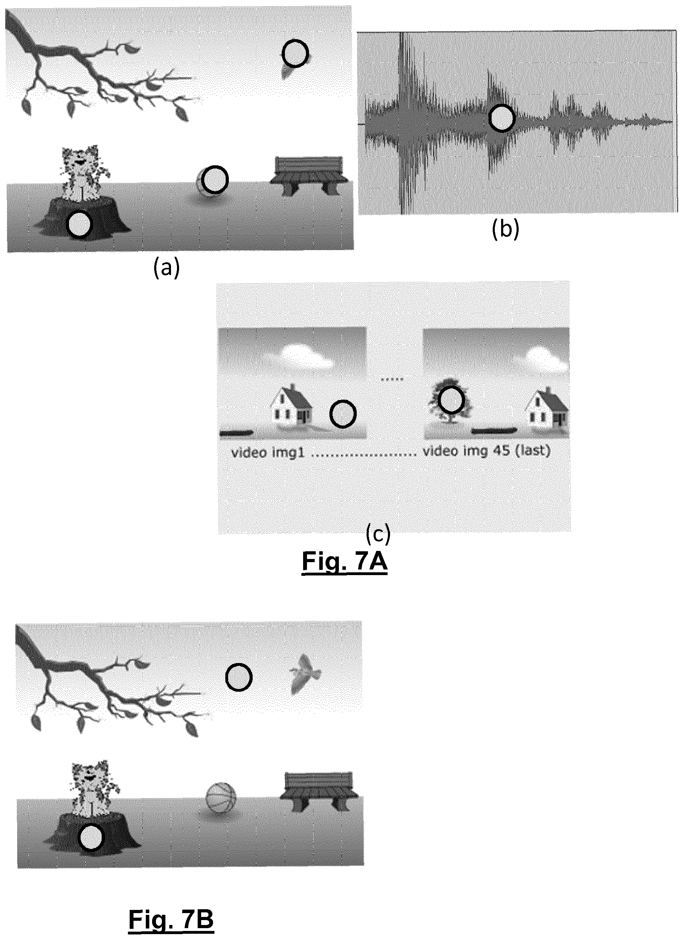

In step 31, the user may also be invited to select locations in space and/or time inside the selected media element. For instance, at step 31, the user has provided a user interface authentication set as illustrated in Fig. 7A. The user has selected the three media elements (a, b, and c) and selected the area shown by grey circles inside those media elements.

In step 31, after each user input selecting an authentication element (media elements or selected areas inside a media element), it is determined if the selected authentication element is a mandatory authentication element, a failure authentication element, or a neutral authentication element being inconsequential to user authentication. Such a determination is done according to the information associated with the authentication element and which is stored in the user interface authentication set, if the selected element is an authentication element of the user interface authentication set.

At step 31, if the selected authentication element is a failure authentication element, a number of selected authentication element being failure authentication element can be increased.

If the selected authentication element is a mandatory authentication element, a number of selected authentication element being mandatory authentication element is increased.

If the selected authentication element is a neutral authentication element, nothing has to be done, as neutral authentication elements have no effect on the user authentication procedure.

When the selected authentication element is not an authentication element from the user interface authentication set, the user input is considered as a user error in the selection of the mandatory element. Such an error can be taken into account by considering that a mandatory authentication element is missing, and thus the number of selected mandatory authentication element can be decreased.

In another variant, the error can be taken into account by counting the number of errors and triggering failure authentication when the number of errors is above a predetermined tolerance-to-error value.

In step 32, authentication elements are verified. In this step, the number of failure authentication elements is checked, as well as the number of mandatory authentication elements. If the number of user errors is being counted separately, the number of user errors is also checked.

Depending on the variant used, this step may be performed when the user input selection has ended or each time a user input selects an authentication element.

In the latter case, depending on the level of security used for the user authentication procedure, if a failure authentication element is selected by the user, failure authentication may be triggered immediately following the user selection of the failure authentication element is no tolerance to errors is accepted.

Also, validation of the user authentication may be triggered when a minimum number of mandatory authentication elements has been selected.

At step 32, when a tolerance to errors is admitted, it is thus verified if the number of selected authentication element being failure authentication element is below a predetermined tolerance-to-error value. This value could be specific to this step, or shared with other check steps discussed below.

For instance, the predetermined tolerance-to-error value could be the global number of errors accepted during the whole current authentication process, an error being a mandatory element selection being forgotten, or a failure element being selected during that same process.

For security concerns and for keeping the authentication procedure effective, that predetermined tolerance-to-error value should be kept small, typically close to zero, compared to some criteria, such as the total number of mandatory elements that must be selected to initially consider success.

When the tolerance-to-error value is non-zero, the verification at step 32 allows tolerating a few user's errors in the authentication procedure, but these errors must be kept below that tolerance-to-error value to consider the current flawed authentication procedure as successful.

The tolerance-to-error value of a check step may be set according to the level of security used for the on-going authentication procedure. For example, for the highest level of security, the tolerance-to-error value may be zero, that is, no tolerance to errors is allowed.

If at step 32, the number of selected authentication elements being failure authentication elements is above or equals the predetermined tolerance-to-error value, failure of authentication element is triggered at step 33. At this step, the authentication procedure ends, or the user may be given another chance to validate authentication by re-doing the whole selection process from step 31.

At step 32, it is verified if the number of selected authentication elements being mandatory authentication element is reached, minus another predetermined tolerance-to-error value. Here again, this threshold tolerance-to-error value can be used according to the level of security.

For example, in case of high security level, all mandatory elements shall be selected by the user. In this case, the tolerance-to-error being 0, no error in selecting a mandatory authentication element would be tolerated.

For lower level of security, the tolerance-to-error value may be slightly relaxed for any or all checks performed. For instance, these values may be defined with respect to the total number of mandatory elements that must be selected to validate authentication. For instance, a 5% error tolerance would allow at most one error selection amongst mandatory elements for a media password having a length of 20 mandatory authentication elements.

In case the number of errors is counted separately from the number of mandatory authentication elements or from the number of failure authentication elements, the number of errors is also verified with respect to a tolerance-to-error value, as explained above.

According to a variant, and depending on the requirements of the level of security associated with the authentication procedure, the arrangement of the mandatory authentication elements is verified, again with an optional tolerance-to-error value (0 or typically close to 0), possibly allowing a few errors in the mandatory elements selection order defined for the authentication success. For example, with an optional tolerance-to-error value of 0, it is verified if the media elements have been selected by the user in the exact same order as during the media password generation.
For instance, with the error tolerance set to 0, to any check steps (highest security case), according to the user interface authentication set defined with Fig. 5A, if at step 31, the media presentation is done with the list illustrated in Fig. 6, the user shall select the media elements from Fig. 6 in the following order: 2, 10, 9.

Depending on the mode presentation and the size of the device's screen, the elements may be presented multiple times to the user to allow selection of the mandatory authentication elements in the wanted order. For instance, when the mode presentation imposes to present the elements to the user one by one, for example as in Fig.6 in case of presentation on the screen of a smartwatch, media elements are presented one by one; thus, in order to select media element 10 before media element 9, the list has to be presented at least twice.

As the media element 6 is a failure authentication element, this media element shall not be selected here, yielding otherwise to authentication failure.

Depending on the security level requirements, the order of selection of the mandatory areas inside the mandatory elements could also be checked.

If the arrangement of the mandatory authentication elements is not satisfied, failure of authentication element is triggered, and the procedure reaches the failure case (step 33). Otherwise, the process continues to step 36, wherein user authentication is validated.

According to an embodiment of the present principles, in step 37, a validation signal is outputted to the user. For example, a visual signal is displayed on a screen or an audio signal is emitted by the device.

In the case of the authentication elements selected by a user during an authentication procedure illustrated in Fig. 7A, based on the user interface authentication set illustrated on Fig. 5B, user authentication is validated as all mandatory authentication elements, no failure authentication element and one neutral authentication element have been selected.

In the case where the user selects the areas as illustrated in Fig. 7B for the media element (a) from Fig. 7A, the authentication procedure may lead to a failure depending on the level of security as one failure authentication element (selection of the sky) has been selected, and the bird being a mandatory authentication element has not been selected.

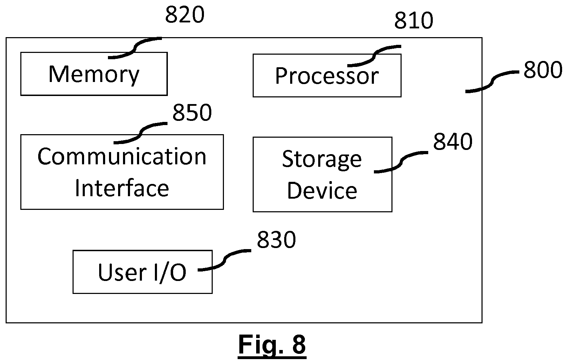

Figure 8 illustrates an exemplary apparatus for determining a user interface authentication set according to an embodiment of the present disclosure and/or for authenticating a user using a user interface authentication set. Fig. 8 illustrates a block diagram of an exemplary system 800 in which various aspects of the exemplary embodiments may be implemented. The system 800 may be embodied as a device including the various components described below and is configured to perform the processes described above. Examples of such devices, include, but are not limited to, mobile devices, personal computers, laptop computers, smartphones, tablet computers, digital multimedia set top boxes, digital television receivers, personal video recording systems, connected home appliances, and servers. The system 800 may be communicatively coupled to other similar systems, and to a display via a communication channel.

Various embodiments of the system 800 include at least one processor 810 configured to execute instructions loaded therein for implementing the various processes as discussed above. The processor 810 may include embedded memory, input output interface, and various other circuitries as known in the art. The system 800 may also include memory 820 (e.g. a volatile memory device, a non-volatile memory device). The system 800 may additionally include a storage device 840, which may include non-volatile memory, including, but not limited to, EEPROM, ROM, PROM, RAM, DRAM, SRAM, flash, magnetic disk drive, and/or optical disk drive. The storage device 840 may comprise an internal storage device, an attached storage device, and/or a network accessible storage device, as non-limiting examples.

Program code to be loaded onto one or more processors 810 to perform the various processes described hereinabove may be stored in the storage device 840 and subsequently loaded onto the memory 820 for execution by the processors 810. In accordance with the exemplary embodiments, one or more of the processor(s) 810, the memory 820, and the storage device 840, may store one or more of the various items during the performance of the processes discussed herein above, including, but not limited to the media elements for selection, user interface authentication set elements, security level requirements, variables, operations, and operational logic.

The system 800 may also include a communication interface 850 that enables communication with other devices via a communication channel. The communication interface 850 may include, but is not limited to a transceiver configured to transmit and receive data from the communication channel. The communication interface 850 may include, but is not limited to, a modem or network card and the communication channel 850 may be implemented within a wired and/or wireless medium. The various components of the system 800 may be connected or communicatively coupled together (not shown) using various suitable connections, including, but not limited to internal buses, wires, and printed circuit boards.

The system 800 also includes user interactions means 830 coupled to the processor for receiving user inputs.

The exemplary embodiments may be carried out by computer software implemented by the processor 810 or by hardware, or by a combination of hardware and software. As a non-limiting example, the exemplary embodiments may be implemented by one or more integrated circuits. The memory 820 may be of any type appropriate to the technical environment and may be implemented using any appropriate data storage technology, such as optical memory devices, magnetic memory devices, semiconductor-based memory devices, fixed memory, and removable memory, as non-limiting examples. The processor 810 may be of any type appropriate to the technical environment, and may encompass one or more of microprocessors, general purpose computers, special purpose computers, and processors based on a multi-core architecture, as non-limiting examples.

The implementations described herein may be implemented in, for example, a method or a process, an apparatus, a software program, a data stream, or a signal. Even if only discussed in the context of a single form of implementation (for example, discussed only as a method), the implementation of features discussed may also be implemented in other forms (for example, an apparatus or a program). An apparatus may be implemented in, for example, appropriate hardware, software, and firmware. The methods may be implemented in, for example, an apparatus such as, for example, a processor, which refers to processing devices in general, including, for example, a computer, a microprocessor, an integrated circuit, or a programmable logic device. Processors also include communication devices, such as, for example, computers, cell phones, portable/personal digital assistants ("PDAs"), and other devices that facilitate communication of information between end-users.

According to an aspect of the disclosed principles, in a method for authenticating a user, a processor receives user input representing selected authentication elements among authentication elements presented to a user, and triggers failure of user authentication, or validates user authentication responsive to received authentication elements using at least one user interface authentication set comprising at least one mandatory authentication element required to be selected by a user for successful user authentication and at least one failure authentication element triggering failure of user authentication when selected by a user, wherein at least one authentication element corresponds to a time location in a media content.

According to a further aspect of the disclosed principles, an apparatus for authenticating a user comprises an interface for receiving user input representing selected authentication elements among authentication elements presented to a user, and at least one processor for triggering failure of user authentication and means for validating user authentication responsive to received authentication elements using at least one user interface authentication set comprising at least one mandatory authentication element required to be selected by a user for successful user authentication and at least one failure authentication element triggering failure of user authentication when selected by a user, wherein at least one authentication element corresponds to a time location in a media content.

In an embodiment, the user interface authentication set further comprises a neutral authentication element being inconsequential to user authentication when said at least one authentication element is selected by a user during user authentication.

In a further embodiment, triggering failure or validating user authentication is based on at least one of a number of selected failure authentication elements received and a number of selected mandatory authentication elements received.

In a further embodiment, an authentication element can further comprise a spatial location in said media element.

In a further embodiment, a media element can be a video or a representation of sound.

In a further embodiment, said user authentication set comprises at least two mandatory authentication elements arranged in a mandatory order.

In a further embodiment, the apparatus is a video receiver, a mobile phone, a tablet, a virtual reality head-mounted display system, or a smartwatch.

In a further aspect, the disclosed principles are directed to a computer program comprising software code instructions for performing any embodiment of the disclosed method.

In a further aspect, the disclosed principles are directed to a non-volatile memory storing software code instructions that, when executed by a hardware processor, perform any embodiment of the disclosed method.

## Claims

1. A method for authenticating a user, said method being executed by at least one processor and comprising:
- receiving (31) user input representing selected authentication elements among authentication elements presented to a user,
- triggering (33) failure of user authentication, or validating (36) user authentication responsive to received authentication elements using at least one user interface authentication set comprising at least one mandatory authentication element required to be selected by a user for successful user authentication and at least one failure authentication element triggering failure of user authentication when selected by a user,
wherein at least one authentication element corresponds to a time location in a media content.

2. An apparatus (800) for authenticating a user, said apparatus comprising:
- an interface (830) for receiving user input representing selected authentication elements among authentication elements presented to a user,
- at least one processor (810) for triggering failure of user authentication and means (810) for validating user authentication responsive to received authentication elements using at least one user interface authentication set comprising at least one mandatory authentication element required to be selected by a user for successful user authentication and at least one failure authentication element triggering failure of user authentication when selected by a user,
wherein at least one authentication element corresponds to a time location in a media content.

3. The method according to claim 1 or the apparatus according to claim 2, wherein the user interface authentication set further comprises a neutral authentication element being inconsequential to user authentication when said at least one authentication element is selected by a user during user authentication.

4. The method according to claim 1 or the apparatus according to claim 2, wherein triggering failure or validating user authentication is based on at least one of a number of selected failure authentication elements received and a number of selected mandatory authentication elements received.

5. The method according to claim 1 or the apparatus according to claim 2, wherein an authentication element can further comprise a spatial location in said media element.

6. The method according to claim 1 or the apparatus according to claim 2, wherein a media element can be a video or a representation of sound.

7. The method according to claim 1 or the apparatus according to claim 2, wherein said user authentication set comprises at least two mandatory authentication elements arranged in a mandatory order.

8. The apparatus according to claim 2, said apparatus being a video receiver, a mobile phone, a tablet, a virtual reality head-mounted display system, or a smartwatch.

9. A computer program comprising software code instructions for performing the method according to any one of claims 1 and 3-8, when the computer program is executed by a hardware processor.

10. A non-volatile memory storing software code instructions that, when executed by a hardware processor, perform the method according to any one of claims 1 and 3-8.
